Europäisches Patentamt

European Patent Office

Office européen des brevets

(11) Veröffentlichungsnummer: **0 129 688**
**A1**

# (12) EUROPÄISCHE PATENTANMELDUNG

(21) Anmeldenummer: 84105395.2

(51) Int. Cl.⁴: **G 02 B 5/30**

(22) Anmeldetag: 12.05.84

(30) Priorität: 26.05.83 DE 3319151

(43) Veröffentlichungstag der Anmeldung:
02.01.85 Patentblatt 85/1

(84) Benannte Vertragsstaaten:
AT CH DE GB LI

(71) Anmelder: Mergenthaler Linotype GmbH
Frankfurter Allee 55-75
D-6236 Eschborn(DE)

(72) Erfinder: Härig, Thomas, Dr.
Liegnitzer Strasse 24
D-6233 Kelkheim(DE)

(72) Erfinder: Plaot, Michael
Hamburger Strasse 36-38
D-6236 Eschborn(DE)

(74) Vertreter: Schubert, Siegmar, Dipl.-Ing. et al,
Patentanwälte Dr. V. Schmied-Kowarzik Dr. P. Weinhold
Dr.-Ing. G. Dannenberg Dr. D. Gudel Dipl.-Ing. S.
Schubert Dr. P. Barz Grosse Eschenheimer Strasse 39
D-6000 Frankfurt am Main 1(DE)

(54) Einstellbarer Laserlicht-Abschwächer für typografische Setz- und Druckgeräte.

(57) Ein einstellbarer Laserlicht-Abschwächer (9) für typografische Setz- und Druckgeräte ist in der optischen Achse (2)
einer polarisiertes Licht nur einer Polarisation abstrahlenden
Laserlichtquelle (1) angeordnet. Zur stufenlos einstellbaren
Abschwächung ohne Auslenkung des Laserlichtbündels sind
in einem Halter nur zwei planparallele Glasplatten (10,11)
symetrisch zueinander geneigt angeordnet. Die Neigung der
Glasplatten ist so gewählt, daß der Laserlichteinfallswinkel
annähernd dem Brewster-Winkel entspricht. Der Halter ist mit
den Glasplatten als Einheit in der optischen Achse schwenkbar, die zugleich die gedachte Drehachse darstellt.

Fig. 1

EP 0 129 688 A1

- 1 -

Einstellbarer Laserlicht-Abschwächer für typografische
Sezt- und Druckgeräte

Die Erfindung betrifft einen einstellbaren Laserlicht-
Abschwächer für einstellbare typografische Setz- und Druckgeräte nach dem Oberbegriff des Anspruchs 1 bzw. 2.

Um beim typografischen Setzen oder Drucken einen Aufzeichnungsträger mit der gewünschten Intensität zu belichten,
um - im Falle eines Aufzeichnungsträgers mit Silberhalogeniden - eine gewünschte Schwärzung zu erzielen und generell
eine scharfe Begrenzung der belichteten Schriftzeichen zu
gewährleisten, ist es gewünscht, das von einer Lichtquelle
ausgehende Strahlenbündel erforderlichenfalls abzuschwächen.
Ein solcher Wunsch besteht insbesondere dann, wenn
die Belichtungszeit veränderlich ist.
Damit das den Aufzeichnungsträger
belichtende Strahlenbündel im Bedarfsfalle abgeschwächt
werden kann, ist beispielsweise ein Filterrad bekannt,
welches mit Filtern unterschiedlicher Absorption bestückt
ist, die wahlweise in den Strahlengang gedreht werden
können. Damit ist aber nur eine grobstufige Einstellung
möglich, wenn die Anzahl der Filter begrenzt sein soll.

Bei der Verwendung einer Laserlichtquelle, die im Fotosatz
ebenfalls an sich bekannt ist, gestaltet sich eine stufenlose Abschwächung des den Aufzeichnungsträger belichtenden
Strahlenbündels insofern noch schwieriger als bei der Verwendung von Blitzlichtlampen oder Kathodenstrahlröhren als
Lichtquelle, da die Helligkeit der letztgenannten Lichtquellen durch Einstellung elektrischer Parameter verändert
werden kann.

- 2 -

Um Laserlicht kontinuierlich und möglichst ohne sonstige Veränderung eines Laserlichtbündels abzuschwächen, sind verschiedene Einrichtungen bekannt (Zeitschrift LASER FOCUS, April 1983, 55-62). Von den hier besonders interessierenden Abschwächern, die die Polarisation des abzuschwächenden Laserbündels ausnutzen, gehören insbesondere Infrarot-Polarisatoren, die jeweils aus zwei trapezförmigen Prismen bestehen, in die ein Körper aus Ca_CO$_3$ im sogenannten Brewster-Winkel geschnitten ist. Die beiden Prismen werden durch einen Halter in dieser fest vorgegebenen gegenseitigen Lage gehalten. Der Halter ist in seiner Gesamtheit in dem Strahlengang des Lasers bewegbar, um eine variable Abschwächung hervorzurufen. Dieser Polarisator ist wie andere bekannte Abschwächer dazu entworfen, möglichst nicht von der Polarisation des abzuschwächenden Lichts abhängig zu sein. Hierzu werden die Stoffeigenschaften dieses bekannten Polarisators ausgenutzt. Nachteilig ist dabei der Herstellungsaufwand für die optischen Teile des Abschwächers, da dieser aus einem ausgesuchten natürlich gewachsenen Kristall hergestellt werden muß.

Ein anderer zur einstellbaren Abschwächung von Infrarotlicht benutzter Polarisator besteht aus sechs bis zehn Platten, die im Brewster-Winkel angeordnet sind und so geneigt sind, daß die durch eine Hälfte der Platten bewirkte Strahlablenkung durch die andere Hälfte rückgängig gemacht wird. Die Abschwächung beruht darauf, daß bei dem Brewster-Winkel das Licht in der p-Polarisation nahezu vollständig durchgelassen wird, während Licht der s-Polarisation auf jeder Oberfläche der Platten reflektiert wird. Die Abschwächung ergibt sich aufgrund dieser Reflektion aus dem Fresnel'schen Gesetz. - Nachteilig sind bei dieser Technik die verhältnismäßig große Zahl optischer Oberflächen, die u.a. einen hohen

- 3 -

Justierungsaufwand erfordern, sowie eine Tendenz zu verhältnismäßig großer Ablenkung des Strahlenbündels (beam steering).

Um weitere Nachteile der voranstehend genannten Plattenstapel-Polisatoren zu vermeiden, die mit planen Platten aufgebaut sind, gehört es auch zum Stand der Technik, einen Abschwächer mit vier keilförmigen Platten zu bilden, die paarweise gegeneinander geneigt sind. Zur Einstellung der Abschwächung ist die gegenseitige Neigung der beiden Plattenpaare zu verändern, d.h. die Plattenpaare sind in einander entgegengesetztem Sinne zu drehen. Dies erfordert einen relativ hohen mechanischen Aufwand, wenn keine anderen Nachteile (Strahlablenkung) in Kauf genommen werden sollen.

Allen bekannten Laserlicht-Abschwächern ist gemeinsam, daß der durch sie bedingte Aufwand für den Einsatz in handelsüblichen typografischen Setz- und Druckgeräten zu hoch ist.

Es ist daher Aufgabe der vorliegenden Erfindung, unter Vermeidung der Nachteile der bekannten Laserlicht-Abschwächer eine solche Anordnung zur Abschwächung des Laserlichts in typografischen Setz- und Druckgeräten zu schaffen, die einen geringen mechanischen und optischen Aufwand erfordern, trotzdem aber hohe Genauigkeitsansprüche bei der Abbildung der typografischen Schriftzeichen erfüllen. Insbesondere soll nur eine einfache mechanische Bewegung zur Einstellung der Abschwächung erforderlich sein, die Tendenz der optischen Elemente, dejustiert zu werden, soll gering sein und die optischen Elemente sollen schließlich nur eine geringe Strahlablenkung hervorrufen.

Diese Aufgabe wird durch die in dem Anspruch 1 bzw. 2 angegebene Erfindung gelöst.

Erfindungsgemäß wird ein überraschend einfacher Aufbau des Laserlicht-Abschwächers gefunden, der nämlich nur aus zwei planparallelen Glasplatten, die in der angegebenen Weise geneigt sind, besteht. Die beiden Glasplatten sind in einem Halter zusammengefaßt, der als Ganzes mit einer einfachen Einstellbewegung zur Variation der Abschwächung in der optischen Achse gedreht werden kann, die auch die gedachte Drehachse darstellt. Die gegenseitige Lage der planparallelen Glasplatten bleibt dabei erhalten. Demzufolge und wegen der geringen Plattenzahl ist auch nur eine geringe unerwünschte Strahlablenkung zu befürchten. Dieser wenig komplizierte Laserlicht-Abschwächer kann vorgesehen werden, da er in Kombination mit einer Laserlichtquelle eingesetzt wird, die nur in einer Richtung polarisiertes Licht abstrahlt. Es entfällt somit in dieser Kombination die Forderung an den Laserlicht-Abschwächer, daß dieser möglichst keine Abhängigkeit von der Polarisation zeigen soll.

Der erfindungsgemäße unkomplizierte Laserlicht-Abschwächer ist so entworfen, daß er eine verhältnismäßig geringe Variationsbreite der Abschwächung in Abhängigkeit von dem Dreh- oder Schwenkwinkel der beiden in dem gemeinsamen Halter festgehaltenen Glasplatten ergibt.

Um größere Änderungen der Abschwächung hervorzurufen, wird dieser kontinuierlich abschwächende Teil mit zwei planparallelen Glasplatten als wirksame Elemente kombiniert mit einem Filterrad, welches Filter unterschiedlicher Durchlässigkeit aufweist. Durch die Kombination dieses stufenweise einstellbaren Abschwächungsmittels mit dem kontinuierlich wirkenden Polarisator wird im Ergebnis eine reproduzierbare feinstufige Abschwächung mit einem großen Bereich bei geringem Aufwand erzielt.

Als besonders fertigungsgünstig hat sich die Verwendung eines Glases mit einem Brechungsindex von 1,7 bis 1,8 für die planparallelen Glasplatten erwiesen, da dann die Glasplatten in der Nähe des Brewster-Winkels von etwa 60° bzw. 180 - 60° geneigt eingestellt werden können. Dies entspricht den Voraussetzungen herkömmlicher Fertigungseinrichtungen.

Mit einem Vorzugsglas des Brechungsindexes von 1,799 läßt sich eine Abschwächung auf ein Drittel der ursprünglichen Intensität erreichen.

Werden die Glasplatten mit Aufdampfschichten versehen, so kann einerseits der Abschwächungsfaktor vergrößert werden, andererseits können Glasart und Neigungswinkel in einem weiten Bereich frei gewählt werden, da Schichtfolge und -dicke auf Winkel und Brechungsindex der Glasplatte abgestimmt werden können. Zum Beispiel für eine Abschwächung bis auf ein Zehntel der ursprünglichen Intensität kann je eine Seite der beiden Platten mit einer polarisationsempfindlichen unkomplizierten Mehrfachschicht mit einer Schicht Titanoxid und einer Schicht Magnesiumfluorid bedampft werden. Die jeweils andere Seite der beiden Platten kann unbedampft belassen werden oder mit einer Antireflexschicht bedampft werden. Falls die mechanische Genauigkeit der Einstellvorrichtung für den schwenkbaren Halter eine noch höhere Abschwächung sinnvoll erscheinen läßt, kann diese durch Erhöhung der Schichtzahl oder beidseitiges Bedampfen der Platte erreicht werden.

Dem entspricht ein Brewster-Winkel von 60,93. Bei einer Einstellung der planparallelen Glasplatten aus dieser Glasart auf einen Brewster-Winkel von 60°, der sich fertigungstechnisch günstig verwirklichen läßt, tritt nur eine geringe Abschwächung des Laserlichts in der Grundeinstellung ein.

Grundeinstellung ist diejenige Einstellung, in der das Licht möglichst ungeschwächt durchgelassen wird. Im Idealfall, in dem das Licht mit p-Polarisation in dem Brewster-Winkel auf der Glasplatte auftrifft, wird das Bündel ungedämpft weitergeleitet. Wenn dagegen die Glasplatten aus dieser Grundeinstellung mit dem Halter herausgedreht werden, wird die Abschwächung erhöht, bis sie bei einem Drehwinkel von 90° ein Maximum nach dem Fresnel'schen Gesetz entsprechend dem Brechungsindex des Glases annimmt.

Die Erfindung wird im folgenden anhand einer Zeichnung mit zwei Figuren erläutert. Es zeigen:

Fig. 1   den vereinfachten Strahlengang eines typografischen Setzgeräts mit einem Filterrad und einem stufenlos einstellbaren Laserlichtabschwächer und

Fig. 2   den einstellbaren Laserlicht-Abschwächer in einem Längsschnitt.

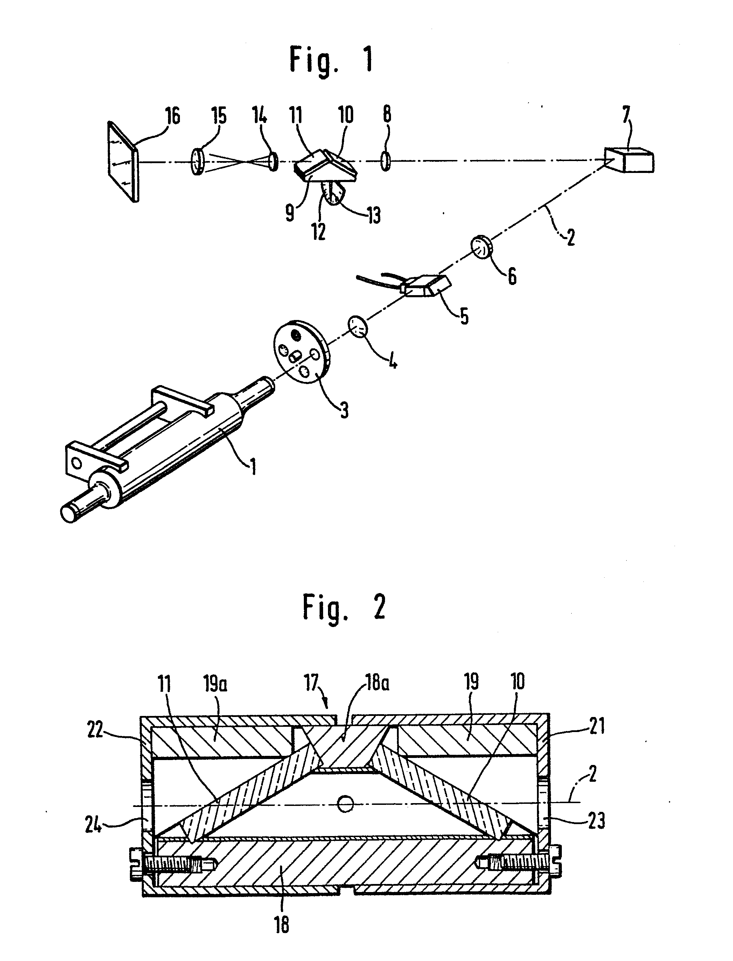

Die Darstellung in Fig. 1 ist verkleinert, diejenige in Fig. 2 vergrößert.

In Fig. 1 ist mit 1 eine Laserlichtquelle bezeichnet, die in einer Polarisationsrichtung polarisiertes Laserlicht abgibt. In der unterbrochen gezeichneten optischen Achse 2 des Laserlichtstrahlenbündels, welches von der Laserlichtquelle ausgeht, ist ein drehbares Filterrad mit vier Abschwächungsfiltern unterschiedlicher Absorption angeordnet. Hierauf erfolgt eine Linsenanordnung 4 zu Bündeln des Laserlichtstrahlenbündels, ein Modulator 5, der das Strahlenbündel mit der Schriftzeicheninformation moduliert und eine Linsenanordnung 6 zum Erweitern des Strahlenbündels. Nach Umlenkung des modulierten Strahlenbündels über einen prismatischen Spiegel 7 gelangt das Strahlenbündel über einen Kollimator 8, auf den - stufenlos - einstellbaren Laserlichtabschwächer 9.

Aus Fig. 1 ist die gegenseitig symmetrisch geneigte Lage zweier planparalleler Glasplatten 10 und 11 aus denen der Laserlicht-Abschwächer optisch besteht, erkennbar. Mit einer Skala 12 und mit einem Zeiger 13 ist angedeutet, daß die Abschwächung des Laserlichtbündels von der Drehstellung des Laserlicht-Abschwächers 9 abhängt.

Während mit dem Filterrad 3 eine Grobeinstellung der Intensität des Laserlichtstrahlenbündels erfolgt, wird die Intensität mit dem Laserlicht-Abschwächer 9 stufenlos fein eingestellt. Das mit den beiden Einstellmitteln 3 und 9 auf die gewünschte Intensität gebrachte Laserlicht wird schließlich mit dem Dekollimator 14 und einem Objektiv 15 auf einem Aufzeichnungsträger 16 abgebildet.

Aus Fig. 2 sind weitere Einzelheiten ersichtlich, wie die beiden symmetrisch zueinander geneigten und auf den Brewster-Winkel eingestellten planparallelen Glasplatten 10 und 11 in einem Halter 17 befestigt sind und mit diesem einen um die Achse 2 schwenkbare bzw. drehbare Einheit bilden. Der Halter besteht im einzelnen aus einem Halteelement 18 mit einem Stützsteg 18a, an den sich zwei Halteringe 19, 19a anschließen. Der Halter mit den in ihm fixierten Glasplatten wird durch angeschraubte Buchsen 21, 22 zusammengehalten. Die Buchsen weisen an ihren Stirnseiten Öffnungen 23, 24 zum Hindurchtritt des Laserlichtbündels auf.

Unter einer Laserlichtquelle, die polarisiertes Licht nur einer Polarisation erzeugt, wird eine Lichtquelle verstanden, die das Licht der einen Polarisation zu anderem Licht bevorzugt in dem Intensitätsverhältnis von 500 : 1 oder größer abgibt.

Zur erfindungsgemäßen anwendung ist beispielsweise ein Helium-Neon Laserkopf der Firma Melles Griot geeignet, der unter der Bezeichnung 05-LHP mit einem Polarisationsverhältnis von 500 : 1 im Handel ist.

Patentansprüche

1. Einstellbarer Laserlicht-Abschwächer für typografische
   Setz- und Druckgeräte, der in der optischen Achse einer
   polarisiertes Licht nur einer Polarisation abstrahlenden
   Laserlichtquelle angeordnet ist,
   d a d u r c h   g e k e n n z e i c h n e t ,
   daß in einem in der optischen Achse (2) schwenkbaren
   Halter (17) nur zwei planparallele Glasplatten (10, 11)
   so zueinander symmetrisch geneigt angeordnet sind, daß
   der Laserlichteinfallswinkel annähernd gleich dem
   Brewster-Winkel ist.

2. Einstellbarer Laserlicht-Abschwächer für typografische
   Setz- und Druckgeräte, der in der optischen Achse einer
   polarisiertes Licht nur einer Polarisation abstrahlenden
   Laserlichtquelle angeordnet ist, in der ein Filterrad
   mit Filtern unterschiedlicher Durchlässigkeit drehbar ist,
   d a d u r c h   g e k e n n z e i c h n e t ,
   daß in einem in der optischen Achse (29 schwenkbaren
   Halter (17) nur zwei planparallele Glasplatten (10, 119
   so zueinander symmetrisch geneigt angeordnet sind, daß
   der Laserlichteinfallswinkel annähernd gleich dem
   Brewster-Winkel ist.

3. Einstellbarer Laserlicht-Abschwächer nach Anspruch 1
   oder 2,
   d a d u r c h   g e k e n n z e i c h n e t ,
   daß die Glasplatten (10, 11) aus einem Glas mit dem
   Brechungsindex von 1,7 bis 1,8 bestehen und die Glasplatten um den Laserlichteinfallswinkel von etwa 60°
   bzw. (180 - 60)° geneigt sind.

0129688

4. Einstellbarer Laserlicht-Abschwächer für typografische Setz- und Druckgeräte, der in der optischen Achse einer polarisiertes Licht nur einer Polarisation abstrahlenden Laserlichtquelle angeordnet ist,

d a d u r c h   g e k e n n z e i c h n e t ,

daß jede der beiden Glasplatten (10, 11) einseitig oder beidseitig mit einer die Abschwächung bei Schwenkung vergrößernden Aufdampfschicht versehen ist.

## Fig. 1

## Fig. 2

Europäisches
Patentamt

**EUROPÄISCHER RECHERCHENBERICHT**

Nummer der Anmeldung

EP 84 10 5395

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | KOHLRAUSCH "PRAKTISCHE PHYSIK", Band 1, 1968, Stuttgart; B.G. TEUBNER, Seiten 487-489 * Kapitel 5.2.4.4.3 * | 1-3 | G 02 B 5/30 |
| Y | H. NAUMANN "OPTIK FÜR KONSTRUKTEURE", Wilhelm Knapp Verlag, Düsseldorf; 1960, Seiten 305-307 * Seite 306 Mitte und Tabelle * | 1-3 | |
| P,A | FR-A-2 517 131 (OLYMPUS OPTICAL CO. LTD.) * Anspruch 1, Figur 1 * | 1 | |
| A | US-A-3 765 746 (E.J. ASHLEY et al.) * Zusammenfassung * | 4 | |
| A | US-A-3 439 968 (W.N. HANSEN et al.) * Figur 1, Zusammenfassung * | | RECHERCHIERTE SACHGEBIETE (Int. Cl. 3) G 02 B 5/30 G 02 B 27/28 |
| A | DE-A-2 330 646 (BECKMAN - RIIC Ltd.) * Anspruch 1, Figur 3 * | | |
| A | Patent Abstracts of Japan Vol. 7, no. 96, 22 April 1983 & JP-A-58-023003 | | |

Der vorliegende Recherchenbericht wurde für alle Patentansprüche erstellt.

| Recherchenort BERLIN | Abschlußdatum der Recherche 05-09-1984 | Prüfer FUCHS R |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82